# EUROPEAN PATENT SPECIFICATION

(11) **EP 2 317 824 B1**
(45) Date of publication and mention of the grant of the patent: **29.07.2015**
(21) Application number: 10187524.3
(22) Date of filing: 14.10.2010
(51) Int. Cl.: H05B 6/12, H05B 6/06

(54) **Induction cooking top**
Induktion Kochplatte
Plaque de cuisson à induction

(30) Priority: 30.10.2009 IT TO20090840
(43) Date of publication of application: 04.05.2011
(73) Proprietor: Indesit Company S.p.A., 60044 Fabriano (AN) (IT)
(72) Inventor: D'Alessandro, Luisa, 67038, Scanno (AQ) (IT); Beato, Alessio, 60044, Fabriano (AN) (IT)
(74) Representative: Santonicola, Paolo

(56) References cited:
- FR-A1- 2 241 943
- FR-A1- 2 758 934
- GB-A- 2 199 720
- JP-A- 10 066 643
- JP-A- 2009 016 251
- JP-A- 2009 231 262

## Description

The present invention relates to an induction cooking top according to the preamble of claim 1.

Induction cooking tops are devices which exploit the phenomenon of induction heating for food cooking purposes.

In such cooking tops, the pot is positioned over a top made of ceramic material, which in turn contains inductors essentially consisting of copper wire coils laid on a support; when an oscillating current (e.g. an alternating current) is circulated in the coils, an oscillating electromagnetic field is produced.

This electromagnetic field has the main effect that a parasitic current is induced inside the pot, which is made of an electrically conductive material. The parasitic current circulating in the pot produces heat by dissipation; said heat is only generated in the pot and acts without heating the cooking top.

These flameless cooking tops are more efficient than electric ones (i.e. a greater fraction of the absorbed electric power is converted into heat used for heating up the pot). In addition, induction cooking tops are safer to use, due to the absence of hot surfaces or flames, thus reducing the risk of bums or fire.

Since heat is generated by induced currents, the cooking top control system monitors the currents flowing through the inductors' coils in accordance with known methods; in this way, the power supplied to each inductor can be adjusted automatically, which is especially useful when the pot does not cover the inductor entirely, so as to adapt the supplied power to the pot size. Moreover, said current monitoring allows to automatically detect the presence of a pot over the inductors and to automatically turn off the latter when the pot is removed from the surface.

In order to obtain the best food cooking results by heating the pot effectively, the coil system must be such as to provide a homogeneous electromagnetic field on the area corresponding to the pot base. Since pots having different shapes and dimensions may be placed over the same cooking top, coil shape and arrangement play an especially important role.

Patent application JP2009-016251 relates to an electromagnetic induction heating cooker that includes an electromagnetic griddle plate with a rectangular bottom part mounted on a heating plate and a heating coil arranged at a lower part of the heating plate. Patent EP0971562 relates to a multi-induction cooking top, i.e. a multi-usage induction heated cooking top having multiple inductors supplied in groups from two separate sources or supplied alternately from a single source. Furthermore it describes an induction cooking top wherein a circular cooking surface, intended for receiving a pot, is fitted with four circular inductors arranged symmetrically relative to the centre of the cooking surface, so that the area occupied by the inductors corresponds as much as possible to the cooking surface to be heated. Although effective, this solution has the drawback that it cannot operate properly with pots having a base of a different area than the cooking surface.

Patents EP1575336 and EP1858300 describe induction cooking tops comprising a large number of equally sized inductors arranged in an orderly manner, even overlapping one another, to create a homogeneous electromagnetic field under the whole cooking surface intended for receiving the pot.

These cooking tops provide a more homogeneous heat distribution, but, due to their numerous inductor, they are quite complex to manufacture; in fact, the inductors must be arranged very close to one another and, in the case of overlapping inductors, they must be positioned on different layers. Moreover, these cooking tops suffer from the drawback that they require a very sophisticated inductor control in order to avoid supplying power to elements not exactly located under the pot.

The object of the present invention is to provide an induction cooking top capable of solving the problems suffered by the prior art.

In particular, it is an object of the present invention to provide a cooking top which, without including an excessive number of inductors, can heat differently sized pots in an effective manner.

It is another object of the present invention to provide an induction cooking top which is simpler and cheaper to manufacture.

Finally, it is a further object of the present invention to provide a cooking top which is easier to control and to adjust compared to prior-art solutions.

These and other objects of the present invention are achieved through a cooking top incorporating the features set out in the appended claims, which are intended as an integral part of the present description.

The general idea at the basis of the present invention is to provide the cooking top with a plurality of differently sized inductors arranged with their centres lying in concentric circumferences, wherein the inductors having their centres lying in the outermost circumferences are smaller than the inductors having their centres lying in the innermost circumferences.

This solutions overcomes the drawbacks of the prior art because, unlike cooking tops with only a few elements arranged symmetrically, it allows pots having different base dimensions to be heated evenly.

Furthermore, unlike cooking tops including many equal small-size elements, this solution allows to use a smaller number of inductors for effectively accommodating and heating pots of different sizes.

Advantageously, the control of the inductors at different distances from the centre of the cooking top is simpler and can be effected by means of a smaller number of known control devices.

The cooking top is thus more efficient from an energy consumption viewpoint because, according to the pot size, the control device supplies power to a reduced number of windings, i.e. only those actually needed to heat the pot.

In addition, the symmetric arrangement of the inductors advantageously allows to effectively heat elongated pans positioned over one row of inductors, if the control device offers this option.

Further objects and advantages of the present invention will become more apparent from the following detailed description and from the annexed drawings, which are supplied by way of non-limiting example, wherein:
- Fig. 1 shows a first induction cooking top according to the teachings of the prior art.
- Fig. 1b is a side view of the cooking top of Fig. 1.
- Fig. 2 shows a second induction cooking top according to the teachings of the prior art.
- Fig. 3 shows a first embodiment of the cooking top according to the present invention.
- Fig. 4 shows a first example of inductors which can be used in the cooking top of Fig. 3.
- Fig. 5 shows a second example of inductors which can be used in the cooking top of Fig. 3.
- Fig. 6 shows a third example of inductors which can be used in the cooking top of Fig. 3.
- Fig. 7 shows a second embodiment of cooking top which is not part of the present invention.
- Fig. 8 shows a third embodiment of the cooking top according to the present invention.
- Fig. 9 shows a fourth embodiment of the cooking top according to the present invention.

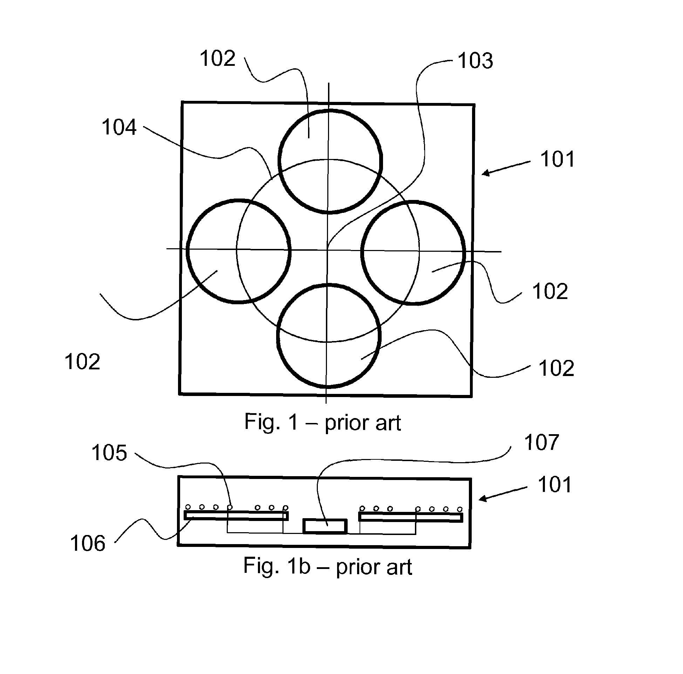

Fig. 1 shows an example of an induction cooking top 101 according to the prior art, of the type equipped with a few inductors arranged symmetrically along a circumference. In particular, the top comprises four non-overlapping circular inductors 102 arranged around a centre of symmetry 103; as can be seen, the centres of the inductors lie in the same circumference 104. Fig. 1b is a side view of the same cooking top 101, showing the windings 105 resting on a support 106 and making up one inductor, along with a known power and control device 107.

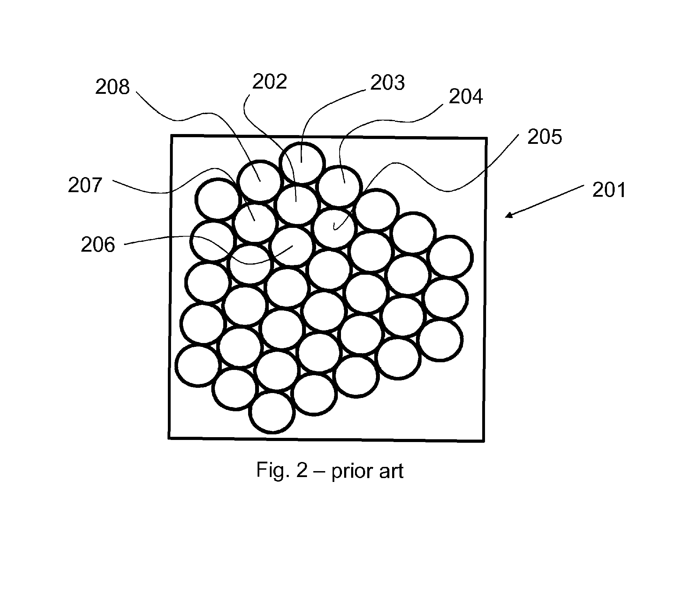

Fig. 2 shows a second example of an induction cooking top 201 according to the prior art, of the type wherein a large number of inductors of the same size are orderly arranged to form a matrix that minimises free spaces. In this case, the top comprises a plurality of circular inductors arranged in a modular way, so that each inductor 202 is tangent at its external edge to six adjacent inductors 203,204,205,206,207,208, thereby creating a compact layout. Likewise, the same configuration could be obtained by using hexagonal inductors; other possible configurations may include square or rectangular inductors.

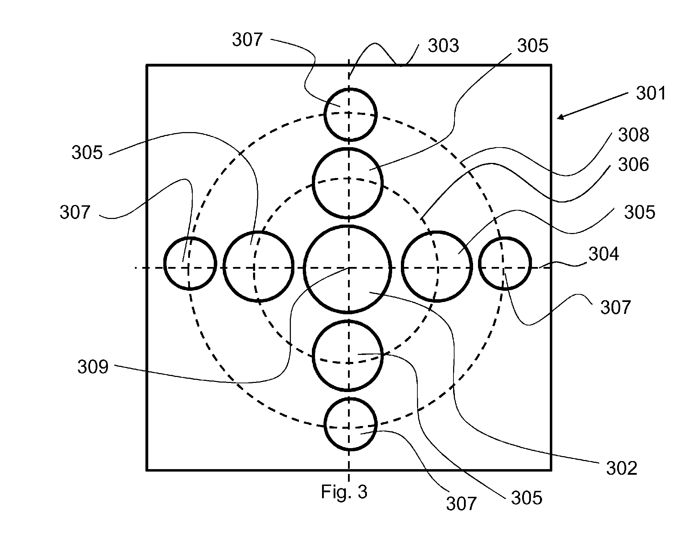

Fig. 3 shows a first embodiment of the induction cooking top 301 according to the present invention. In this example, the inductors have a substantially circular shape, i.e. they comprise a coil wound around a central body arranged in a manner such that it takes up a substantially circular area.

The coil is made out of thin wires made of an electrically conductive material, typically copper, connected by means of two terminals to a frequency generator (not shown in the drawing) capable of generating a time-variable current or voltage, in particular an alternating voltage.

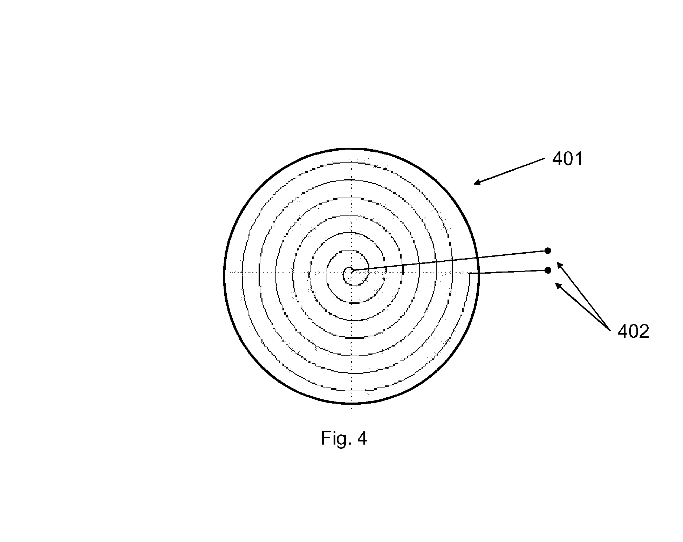

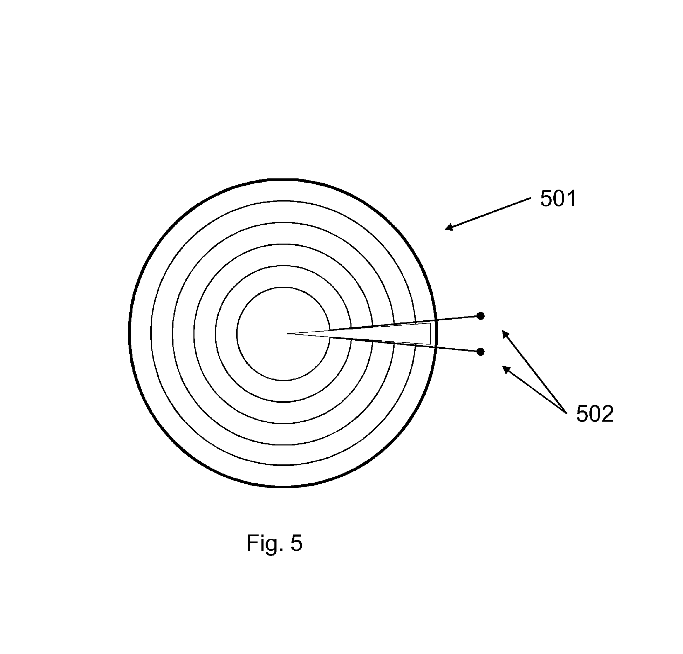

The circular shape may be obtained, for instance, by providing the inductor with a central body 401 shaped like a coil (as shown in Fig. 4) connected to the power terminals 402, or like a series of concentric rings 501 connected to one another and to the power terminals 502 (as shown in Fig. 5).

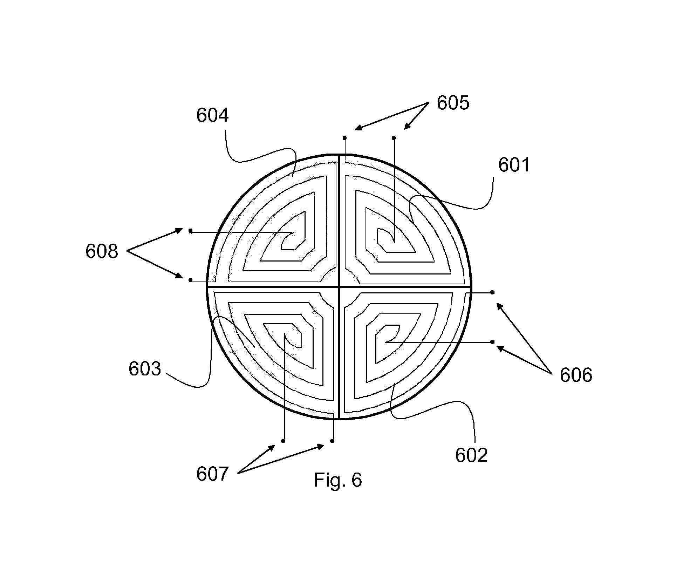

Likewise (as shown in Fig. 6), a circular inductor may be obtained by using four separate windings 601,602,603,604 arranged in such a way as to cover four sectors of a circular body; each winding is fitted with one pair of terminals 605,606,607,608 connected to a generator (not shown).

Referring back to the example of Fig. 3, a main inductor 302 is located at the centre 309 of the cooking top 301; in both orthogonal directions 303 and 304 there are four additional inductors 305 having a smaller diameter than the inductor 302. The centres of the inductors 305 turn out to be equidistant from one another along the circumference 306, the centre of which coincides with that of the inductor 302, i.e. it is concentric with the centre 309. Four additional inductors 307 having an even smaller diameter are arranged farther out, the centres of which are equidistant from one another along the circumference having the longest radius 308.

In particular, the inductors 302, 305 and 307 are separate from one another and do not overlap.

In addition, it must be pointed out that the term "centre", when referred to the inductors, means in general the geometric centre thereof; for circular inductors such as those shown in Fig. 3, some examples thereof are also provided in Figs. 4, 5 and 6, the inductor's geometric centre is that point which is equidistant from all points of the inductor's circumference. When different inductors are used, e.g. having the shape of a regular polygon, the geometric centre is that point which is equidistant from the median points of the polygon's sides. Finally, if inductors of any shape were used, the concept of geometric centre would have to be replaced by the concept of centre of gravity, i.e. that point through which static moments (of the first order) are cancelled, which in the case of circles or regular plane figures coincides with the geometric centre thereof.

Preferably, when a container or a pot has such dimensions that it prevalently covers the inductor 302, the cooking top control system (not shown) will supply power to that inductor only in order to effectively heat the pot.

If, on the contrary, the pot has such dimensions as to cover the inductor 302 as well as the inductors 305 (e.g. the pot diameter is greater than the circumference 306, but smaller than the circumference 308), the cooking top control system will supply power to the inductors 302 and 305 to ensure a homogeneous electromagnetic field on the surface occupied by the pot.

Finally, if the pot has such dimensions as to cover the inductor 302 as well as all of the inductors 305 and 307 (e.g. the pot diameter is greater than the circumference 308), the cooking top control system will supply power to all inductors so as to generate an electromagnetic field being as uniform and broad as possible.

The cooking top control system recognises, in accordance with methods being per se known, e.g. based on measuring the current circulating within the inductors, the presence of pots over the inductors and determines which inductors are to be supplied and at which power level, also taking into account the user's preferences signalled, for example, through an adjustment display. If the cooking top does not detect the presence of any pots, then it will cut out the current flow in the corresponding inductors.

The solution shown in Fig. 3 has the technical effect of ensuring a homogeneous electromagnetic field in the cooking area which is to receive the pot, without however requiring a large number of inductors. The central portion of the cooking area, which is used more often, is covered by one large inductor, whereas the peripheral inductors, which are smaller, allow to properly cover the available space without any overlap.

The use of inductors whose size becomes gradually smaller as the distance from the centre of the cooking area increases provides a more effective heating of variously sized pots, since those inductors located farther away from the centre of the cooking area and only partially covered by the pot are smaller; compared to the solutions with all equal inductors, the power supplied to the inductors but not used for heating the pot is thus reduced.

Moreover, a symmetric distribution with respect to the centre 309 of the cooking surface, like the one shown in Fig. 3, provides a simpler control over the cooking top.

In a possible embodiment, the cooking top control system (not shown) can be simplified by controlling the inductors in groups; for example, a group may consist of all the inductors whose centres lie in the same circumference.

With reference to the example of Fig. 3, it is for instance possible to logically subdivide the inductor control into three zones corresponding to the hob centre and to the circumferences 306 and 308.

Alternatively, the cooking top control system may adjust each inductor separately, thus making it possible to use elongated pans (e.g. in the directions 303 or 304) or to warn the user when the pot has not been positioned exactly at the hob centre (e.g. by means of an audible and/or luminous signal).

Furthermore, preferably, the inductors arranged at a different distance from the centre of the cooking top may have different power ratings, i.e. they may generate magnetic fields establishing parasitic currents that dissipate different amounts of power.

For example, the inductors may all be powered in a manner such as to provide the same specific output (i.e. output divided by the area of the generating surface). In such a case, the central inductor 302 will be more powerful than the peripheral inductors 305 and 307, since its area is greater. The entire pot surface can thus be heated effectively.

As an alternative, it is conceivable to supply a power surplus to the central inductor 302, if faster pot heating is required, e.g. in order to boil water.

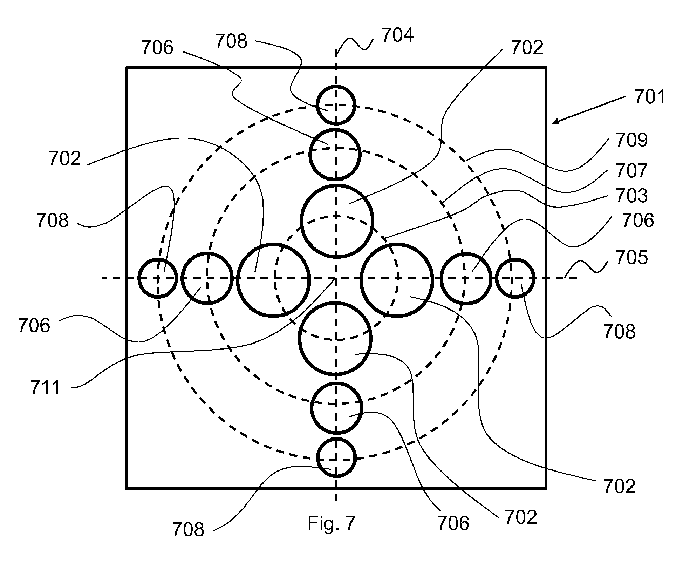

Fig. 7 shows a cooking top 701 according to a second embodiment not being part of the present invention.

In this example, four inductors 702 are arranged close to one another along a circumference 703 near the centre 711 of the cooking surface, defined by the axes 704 and 705.

Farther out, there are the inductors 706 lying in the circumference 707.

At an even greater distance from the centre 711 there are the inductors 708, which are arranged equidistant from one another along the circumference 709.

Unlike the example of Fig. 3, the cooking top of Fig. 7 does not have a central inductor whose centre coincides with the centre 711 of the cooking surface, i.e. with the common centre of the concentric circumferences 703,707,709.

The size of the inductors 702, 706 and 708 decreases in a strictly monotonic manner as the distance from the centre 711 of the inductor assembly increases.

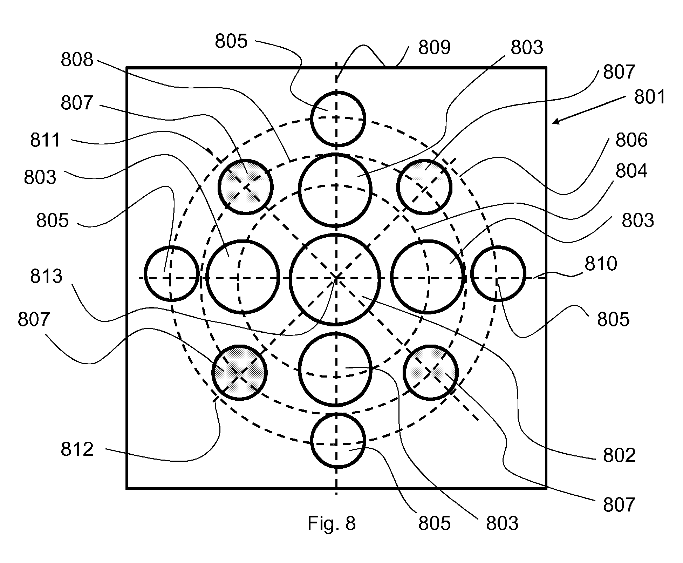

Fig. 8 shows a cooking top 801 according to a third embodiment of the present invention.

The cooking top comprises a central inductor 802 and peripheral inductors 803, 805 and 807 respectively arranged along three concentric circumferences 804, 806 and 808, similar to those of the example of Fig. 3, whose centre coincides with the centre of the cooking surface. In addition, the cooking top 801 also comprises inductors 807 lying in different axes other than the axes 809 and 810. In this example, the inductors 807 are arranged on the axes 811 and 812, with their centres lying in the circumference 808.

The layout of Fig. 8 is symmetrical relative to an axis 809 or 810 passing through the centre 813 of the cooking surface and orthogonal to the cooking top; likewise, it is symmetrical relative to one of the axes 811 or 812 that connect the centre 813 of the cooking surface to the centre of one of the inductors 807.

In the example of Fig. 8, the inductors 805 and 807 are of the same size, but they are smaller than the inductors 803 that lie in a circumference closer to the centre 813 of the cooking surface.

In turn, the inductors 803 are smaller than the central inductor 802 (i.e. the one located on a concentric circumference having a radius equal to zero).

In the example of Fig. 8 as well, the cooking top has a plurality of differently sized inductors, and is configured in a manner such that the inductors grow bigger towards the centre of the cooking surface.

In this case, the dimensions of the inductors are reduced in a decreasing monotonic manner as the distance from the common centre of the circumferences 804,806,808 increases, so that inductors lying in two adjacent circumferences may be of the same size, but nonetheless they are smaller than inductors lying in circumferences closer to the centre.

In the solution shown in Figs. 3 and 7, the size decreases according to a strictly decreasing monotonic law.

In addition to the above observations relating to the example shown in Fig. 3, the idea of adding the inductors 807 has the technical effect of improving the uniformity of the electromagnetic field in the outermost regions of the pot by adding field sources where there are fewer inductors. Therefore, this solution offers the advantage that the heat supplied to the pot's outermost portion is more homogeneous, leading to better cooking results.

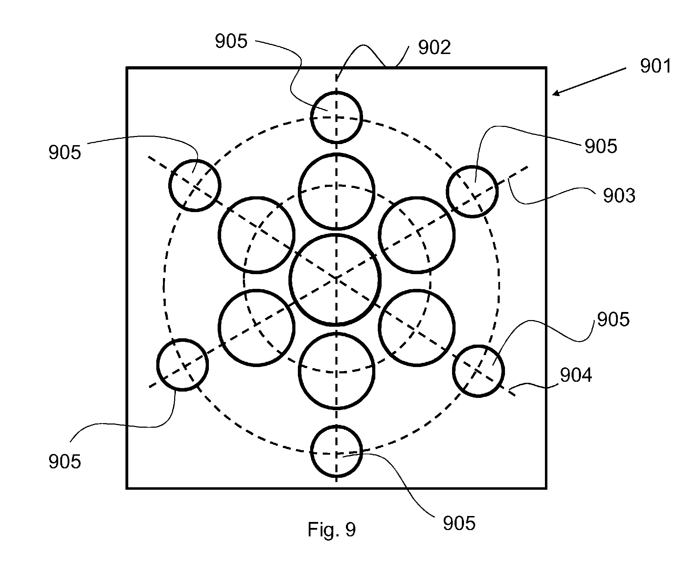

Finally, Fig. 9 shows a cooking top 901 according to a fourth embodiment of the present invention. In this example there are thirteen inductors arranged with their centres along the axes 902, 903 and 904, which define six symmetrical portions on the cooking top. The layout shown in Fig. 9 can therefore be inscribed into a regular hexagon having its vertices in the inductors 905.

This solution provides a higher degree of symmetry which improves the uniformity of the electromagnetic field, thereby generating a more homogeneous heat distribution for better food cooking results.

It is apparent that many changes may be made to the present invention by those skilled in the art without departing from the protection scope thereof as stated in the appended claims.

For example, the cooking top may include inductors having each a specific power rating, different from that of the other inductors arranged at the same distance from the centre and from that of inductors arranged at different distances.

Furthermore, as aforementioned, the shape of the single inductors may be other than circular, e.g. a regular polygon or any other shape.

Also, the inductors' layout on the cooking top may combine together features described herein with reference to different figures, without however departing from the protection scope of the present patent.

Finally, the inductors' layout may follow the shape of other regular polygons or even of irregular polygons without any symmetry, with the inductors still arranged along concentric circumferences and having decreasing dimensions as the distance from the hob centre increases.

## Claims

1. An induction cooking top (301,801,901) comprising a plurality of non-overlapping inductors (305,307,804,805,807,905) arranged with their centres lying in concentric circumferences (306,308,804,806,808) wherein the size of said inductors (305,307,804,805,807,905) of said plurality follows a decreasing monotonic law as the distance from the centre of said circumferences increases, **characterised in that** said induction cooking top (301,801,901) further comprises a central inductor (302,802) whose centre (309,813) substantially coincides with the centre of said concentric circumferences, (306,308,804,806,808) wherein said central inductor is (302,802) larger than the inductors (305,307,804,805,807,905) of said plurality of inductors.

2. A cooking top (301) according to claim 1, wherein the size of said inductors (305,307) follows a strictly decreasing monotonic law as the distance from said centre (309) of said cooking top (301) increases.

3. A cooking top (301,801,901) according to claim 1 or 2, wherein said plurality of inductors (305,307,804,805,807,905) are arranged symmetrically relative to at least one axis (303,304,809,810,811,902,903,904) passing through the centre of said concentric circumferences.

4. A cooking top (301,801,901) according to any one of claims 1 to 3, wherein the inductors (305,307,804,805,807,905) of said plurality of inductors have a circular shape.

5. A cooking top (301,801,901) according to any one of claims 1 to 4, further comprising means adapted to detect the presence of a pot over at least one inductor (305,307,804,805,807,905) of said plurality and to automatically ignite and adjust the power of said at least one inductor.

6. A cooking top (301,801,901) according to claim 5, wherein said automatic ignition and adjustment means acting upon said inductors can simultaneously control groups of inductors.

7. A cooking top (301,801,901) according to claim 6, wherein one of said groups of inductors comprises inductors arranged on one of said concentric circumferences.

8. A cooking top (301,801,901) according to claim 6 or 7 when dependent on claim 3, wherein said axis (303,304,809,810,811,902,903,904) of symmetry lies in the plane of said inductors, and wherein one of said groups comprises inductors arranged on said axis of symmetry.

9. A cooking top (301,801,901) according to claims 1 to 8, wherein at least two inductors of said plurality have different power ratings.

10. A cooking top (301,801,901) according to claim 9, wherein the geometric centres of said at least two inductors lie at a different distance from the centre of said circumferences, and wherein the farther inductor is less powerful.

## Patentansprüche

1. Induktionskochplatte (301, 801, 901) umfassend eine Mehrzahl von sich nicht überlappenden Induktionsvorrichtungen (305, 307, 804, 805, 807, 905), welche derart angeordnet sind, dass ihre Zentren in konzentrischen Umfängen (306, 308, 804, 806, 808) liegen, wobei die Größe der Induktionsvorrichtungen (305, 307, 804, 805, 807, 905) der Mehrzahl einem monoton absteigenden Gesetz folgt, wenn der Abstand von dem Zentrum der Umfänge zunimmt, **dadurch gekennzeichnet, dass** die Induktionskochplatte (301, 801, 901) ferner eine zentrale Induktionsvorrichtung (302, 802) umfasst, deren Zentrum (309, 813) im Wesentlichen mit dem Zentrum der konzentrischen Umfänge (306, 308, 804, 806, 808) zusammenfällt, wobei die zentrale Induktionsvorrichtung (302, 802) größer ist als die Induktionsvorrichtungen (305, 307, 804, 805, 807, 905) der Mehrzahl von Induktionsvorrichtungen.

2. Kochplatte (301) nach Anspruch 1, wobei die Größe der Induktionsvorrichtungen (305, 307) einem streng monoton absteigenden Gesetz folgt, wenn der Abstand von dem Zentrum (309) der Kochplatte (301) zunimmt.

3. Kochplatte (301, 801, 901) nach Anspruch 1 oder 2, wobei die Mehrzahl von Induktionsvorrichtungen (305, 307, 804, 805, 807, 905) relativ zu wenigstens einer Achse (303, 304, 809, 810, 811, 902, 903, 904), welche durch das Zentrum der konzentrischen Umfänge verläuft, symmetrisch angeordnet sind.

4. Kochplatte (301, 801, 901) nach einem der Ansprüche 1 bis 3, wobei die Induktionsvorrichtungen (305, 307, 804, 805, 807, 905) der Mehrzahl von Induktionsvorrichtungen eine kreisförmige Form aufweisen.

5. Kochplatte (301, 801, 901) nach einem der Ansprüche 1 bis 4, ferner umfassend Mittel, welche dazu eingerichtet sind, die Anwesenheit eines Topfes über wenigstens einer Induktionsvorrichtung (305, 307, 804, 805, 807, 905) der Mehrzahl zu erfassen und automatisch eine Stromversorgung der wenigstens einen Induktionsvorrichtung einzuschalten und einzustellen.

6. Kochplatte (301, 801, 901) nach Anspruch 5, wobei die automatischen Einschalt- und Einstell-Mittel, welche auf die Induktionsvorrichtungen einwirken, Gruppen von Induktionsvorrichtungen simultan regeln/steuern können.

7. Kochplatte (301, 801, 901) nach Anspruch 6, wobei eine der Gruppen von Induktionsvorrichtungen Induktionsvorrichtungen umfasst, welche an einem der konzentrischen Umfänge angeordnet sind.

8. Kochplatte (301, 801, 901) nach Anspruch 6 oder 7, wenn abhängig von Anspruch 3, wobei die Symmetrieachse (303, 304, 809, 810, 811, 902, 903, 904) in der Ebene der Induktionsvorrichtungen liegt, und wobei eine der Gruppen Induktionsvorrichtungen umfasst, welche an der Symmetrieachse angeordnet sind.

9. Kochplatte (301, 801, 901) nach Ansprüchen 1 bis 8, wobei wenigstens zwei Induktionsvorrichtungen der Mehrzahl unterschiedliche Nennleistungen aufweisen.

10. Kochplatte (301, 801, 901) nach Anspruch 9, wobei die geometrischen Zentren der wenigstens zwei Induktionsvorrichtungen in einem unterschiedlichen Abstand von dem Zentrum der Umfänge liegen, und wobei die fernere Induktionsvorrichtung weniger leistungsstark ist.

## Revendications

1. Plaque de cuisson à induction (301, 801, 901) comportant une pluralité d'inducteurs ne se chevauchant pas (305, 307, 804, 805, 807, 905) agencés de façon que leurs centres reposent sur des circonférences concentriques (306, 308, 804, 806, 808) dans laquelle la dimension desdits inducteurs (305, 307, 804, 805, 807, 905) de ladite pluralité d'inducteurs suit une loi de décroissance monotone lorsque la distance à partir du centre desdites circonférences augmente, **caractérisée en ce que** ladite plaque de cuisson à induction (301, 801, 809) comprend de plus un inducteur central (302, 802) dont le centre (309, 813) coïncide essentiellement avec le centre desdites circonférences concentriques (306, 308, 804, 806, 808), dans laquelle ledit inducteur central (302, 802) est plus grand que les inducteurs (305, 307, 804, 805, 807, 905) de ladite pluralité d'inducteurs.

2. Plaque de cuisson (301) selon la revendication 1, dans laquelle la dimension desdits inducteurs (305, 307) suit une loi de décroissance monotone lorsque la distance à partir dudit centre (309) de ladite plaque de cuisson (301) augmente.

3. Plaque de cuisson (301, 801, 901) selon la revendication 1 ou 2, dans laquelle ladite pluralité d'inducteurs (305, 307, 804, 805, 807, 905) est agencée de façon symétrique par rapport à au moins un axe (303, 304, 809, 810, 811, 902, 903, 904) passant par le centre desdites circonférences concentriques.

4. Plaque de cuisson (301, 801, 901) selon l'une quelconque des revendications 1 à 3, dans laquelle les inducteurs (305, 307, 804, 805, 807, 905) de ladite pluralité d'inducteurs présentent une configuration circulaire.

5. Plaque de cuisson (301, 801, 901) selon l'une quelconque des revendications 1 à 4, comportant de plus des moyens conçus pour détecter la présence d'un ustensile de cuisson sur au moins un inducteur (305, 307, 804, 805, 807, 905) de ladite pluralité d'inducteurs et afin de mettre en chauffe et de régler automatiquement la puissance dudit au moins un inducteur.

6. Plaque de cuisson (301, 801, 901) selon la revendication 5, dans laquelle lesdits moyens de mise en chauffe et de réglage automatique agissant sur lesdits inducteurs peuvent commander simultanément des groupes d'inducteurs.

7. Plaque de cuisson (301, 801, 901) selon la revendication 6, dans laquelle un inducteur desdits groupes d'inducteurs comporte des inducteurs disposés sur l'une desdites circonférences concentriques.

8. Plaque de cuisson (301, 801, 901) selon la revendication 6 ou 7, lorsque dépendante de la revendication 3, dans laquelle ledit axe de symétrie (303, 304, 809, 810, 811, 902, 903, 904) se trouve dans le plan desdits inducteurs, et dans laquelle l'un desdits groupes comprend des inducteurs disposés sur ledit axe de symétrie.

9. Plaque de cuisson (301, 801, 901) selon les revendications 1 à 8, dans laquelle au moins deux inducteurs de ladite pluralité d'inducteurs ont des puissances nominales différentes.

10. Plaque de cuisson (301, 801, 901) selon la revendication 9, dans laquelle les centres géométriques desdits au moins deux inducteurs se trouvent à une distance différente du centre desdites circonférences, et dans laquelle l'inducteur le plus éloigné est le moins puissant.
